# EUROPEAN PATENT APPLICATION

(11) **EP 4 645 073 A1**
(43) Date of publication of application: **05.11.2025**
(21) Application number: 23909249.7
(22) Date of filing: 27.08.2023
(51) Int. Cl.: G06F 8/71, G06F 9/445

(54) **APPLET PLUG-IN CONFIGURATION METHOD, APPARATUS AND DEVICE**

(30) Priority: 30.12.2022 CN 202211719854
(71) Applicant: Alipay (Hangzhou) Information Technology Co., Ltd., Hangzhou, Zhejiang 310000 (CN)
(72) Inventor: LU, Qiang, Hangzhou, Zhejiang 310000 (CN); CAO, Chunhui, Hangzhou, Zhejiang 310000 (CN)
(74) Representative: Finnegan Europe LLP
(86) International application number: PCT/CN2023/115124
(87) International publication number: WO 2024/139309

(57) **Abstract**

Embodiments of this specification disclose a configuration method, apparatus, and device for a mini program plug-in. The solution may include: providing to a mini program manager a plug-in configuration page that displays preset controls for setting service data and a service data display style at a target plug-in, and determining plug-in configuration information of the mini program manager for the target plug-in at a target mini program based on operation information of a plug-in setting operation performed by the mini program manager using the preset controls, such that when the mini program manager instructs to publish the target plug-in, a plug-in page access address for the target plug-in can be generated according to the plug-in configuration information, which allows the mini program manager to directly use the plug-in page access address to deploy the target plug-in at the target mini program.

## Description

### TECHNICAL FIELD

This application relates to the field of plug-in technologies, and in particular, to a configuration method, apparatus, and device for a mini program plug-in.

### BACKGROUND

With the rapid development of software technology, mini programs have been widely used. A mini program is an application that does not need to be downloaded or installed to be used. Users can call mini programs on a host application to obtain various services that the mini programs provide, which is very convenient. At present, as service updates become increasingly frequent, a mini program manager usually needs to develop program files for plug-ins at a target mini program using various preset interfaces, in accordance with interface capabilities externally provided by a mini program platform, so as to use the newly developed plug-ins to provide users with new services and thus meet service requirements.

As such, how to improve the ease of operation and efficiency of a configuration process for mini program plug-ins has become an urgent technical problem to be solved.

### SUMMARY

Embodiments of this specification provide a configuration method, apparatus, and device for a mini program plug-in, so as to improve the ease of operation and efficiency of a configuration process for mini program plug-ins.

To solve the technical problem described above, embodiments of this specification are implemented as follows. A configuration method for a mini program plug-in according to an embodiment of this specification includes: obtaining operation information of a plug-in setting operation performed by a mini program manager in a plug-in configuration page for a target mini program, where the plug-in setting operation is an operation performed by triggering a preset control for setting service data or a service data display style at a target plug-in; determining plug-in configuration information for the target plug-in at the target mini program based on the operation information of the plug-in setting operation, where the plug-in configuration information is used to indicate that target service data is to be displayed at the target plug-in according to a target display style; obtaining a publishing instruction of the mini program manager for the target plug-in; generating a plug-in page access address for the target plug-in according to the plug-in configuration information in response to the publishing instruction, where the plug-in page access address, when accessed by a terminal device, is used to cause the terminal device to display a page of the target plug-in according to the plug-in configuration information; and sending the plug-in page access address for the target plug-in to a device of the mini program manager.

A configuration method for a mini program plug-in according to an embodiment of this specification includes: obtaining a plug-in setting operation performed by a mini program manager in a plug-in configuration page for a target mini program, where the plug-in setting operation is an operation performed by triggering a preset control for setting service data or a service data display style at a target plug-in; sending operation information of the plug-in setting operation to a target server, the target server being configured to determine plug-in configuration information for the target plug-in at the target mini program based on the operation information, where the plug-in configuration information is used to indicate that target service data is to be displayed at the target plug-in according to a target display style; obtaining a publishing operation of the mini program manager for the target plug-in; sending a publishing instruction for the target plug-in to the target server in response to the publishing operation; and receiving a plug-in page access address for the target plug-in that is fed back by the target server, where the plug-in page access address, when accessed by a terminal device, is used to cause the terminal device to display a page of the target plug-in according to the plug-in configuration information.

A configuration apparatus for a mini program plug-in according to an embodiment of this specification includes: a first obtaining module, configured to obtain operation information of a plug-in setting operation performed by a mini program manager in a plug-in configuration page for a target mini program, where the plug-in setting operation is an operation performed by triggering a preset control for setting service data or a service data display style at a target plug-in; a plug-in configuration information determining module, configured to determine plug-in configuration information for the target plug-in at the target mini program based on the operation information of the plug-in setting operation, where the plug-in configuration information is used to indicate that target service data is to be displayed at the target plug-in according to a target display style; a second obtaining module, configured to obtain a publishing instruction of the mini program manager for the target plug-in; a first generation module, configured to generate a plug-in page access address for the target plug-in according to the plug-in configuration information in response to the publishing instruction, where the plug-in page access address, when accessed by a terminal device, is used to cause the terminal device to display a page of the target plug-in according to the plug-in configuration information; and a sending module, configured to send the plug-in page access address for the target plug-in to a device of the mini program manager.

A configuration apparatus for a mini program plug-in according to an embodiment of this specification includes: a first obtaining module, configured to obtain a plug-in setting operation performed by a mini program manager in a plug-in configuration page for a target mini program, where the plug-in setting operation is an operation performed by triggering a preset control for setting service data or a service data display style at a target plug-in; a first sending module, configured to send operation information of the plug-in setting operation to a target server, the target server being configured to determine plug-in configuration information for the target plug-in at the target mini program based on the operation information, where the plug-in configuration information is used to indicate that target service data is to be displayed at the target plug-in according to a target display style; a second obtaining module, configured to obtain a publishing operation of the mini program manager for the target plug-in; a second sending module, configured to send a publishing instruction for the target plug-in to the target server in response to the publishing operation; and a receiving module, configured to receive a plug-in page access address for the target plug-in that is fed back by the target server, where the plug-in page access address, when accessed by a terminal device, is used to cause the terminal device to display a page of the target plug-in according to the plug-in configuration information.

A configuration device for a mini program plug-in according to an embodiment of this specification includes: at least one processor; and a memory communicatively connected to the at least one processor, where the memory stores instructions executable by the at least one processor, and the instructions are executed by the at least one processor, to cause the at least one processor to: obtain operation information of a plug-in setting operation performed by a mini program manager in a plug-in configuration page for a target mini program, where the plug-in setting operation is an operation performed by triggering a preset control for setting service data or a service data display style at a target plug-in; determine plug-in configuration information for the target plug-in at the target mini program based on the operation information of the plug-in setting operation, where the plug-in configuration information is used to indicate that target service data is to be displayed at the target plug-in according to a target display style; obtain a publishing instruction of the mini program manager for the target plug-in; generate a plug-in page access address for the target plug-in according to the plug-in configuration information in response to the publishing instruction, where the plug-in page access address, when accessed by a terminal device, is used to cause the terminal device to display a page of the target plug-in according to the plug-in configuration information; and send the plug-in page access address for the target plug-in to a device of the mini program manager.

A configuration device for a mini program plug-in according to an embodiment of this specification includes: at least one processor; and a memory communicatively connected to the at least one processor, where the memory stores instructions executable by the at least one processor, and the instructions are executed by the at least one processor, to cause the at least one processor to: obtain a plug-in setting operation performed by a mini program manager in a plug-in configuration page for a target mini program, where the plug-in setting operation is an operation performed by triggering a preset control for setting service data or a service data display style at a target plug-in; send operation information of the plug-in setting operation to a target server, the target server being configured to determine plug-in configuration information for the target plug-in at the target mini program based on the operation information, where the plug-in configuration information is used to indicate that target service data is to be displayed at the target plug-in according to a target display style; obtain a publishing operation of the mini program manager for the target plug-in; send a publishing instruction for the target plug-in to the target server in response to the publishing operation; and receive a plug-in page access address for the target plug-in that is fed back by the target server, where the plug-in page access address, when accessed by a terminal device, is used to cause the terminal device to display a page of the target plug-in according to the plug-in configuration information.

At least one embodiment provided in this specification can achieve the following beneficial effects: A plug-in configuration page that displays preset controls for setting service data and a service data display style at a target plug-in is provided to a mini program manager, and plug-in configuration information of the mini program manager for the target plug-in at a target mini program is determined based on operation information of a plug-in setting operation performed by the mini program manager using the preset controls, such that when the mini program manager instructs to publish the target plug-in, a plug-in page access address for the target plug-in can be generated according to the plug-in configuration information, which allows the mini program manager to directly use the plug-in page access address to deploy the target plug-in at the target mini program or another application. In this solution, the mini program manager can conveniently develop and configure the target plug-in at the target mini program by operating the preset controls in the plug-in configuration page, without the need to use a preset interface to develop program files of the target plug-in. This is conducive to improving the ease of operation and efficiency of a configuration process for mini program plug-ins by the mini program manager.

### BRIEF DESCRIPTION OF DRAWINGS

In order to illustrate the technical solutions of the embodiments of this specification more clearly, the following briefly describes the accompanying drawing for describing the embodiments. Apparently, the accompanying drawings in the following description merely show some embodiments recorded in this application, and those of ordinary skill in the art can obtain other drawings from these accompanying drawings without any creative efforts.
FIG. 1 is a schematic diagram illustrating an application scenario of a reward resource distribution method, according to an embodiment of this specification;
FIG. 2 is a schematic flowchart illustrating a reward resource distribution method, according to an embodiment of this specification;
FIG. 3 is a schematic flowchart illustrating another reward resource distribution method, according to an embodiment of this specification;
FIG. 4 is a schematic diagram illustrating a plug-in configuration page for a target mini program, according to an embodiment of this specification;
FIG. 5 is a schematic swimlane flowchart corresponding to the reward resource distribution methods of FIG. 2 and FIG. 3, according to an embodiment of this specification;
FIG. 6 is a schematic diagram illustrating a structure of a reward resource distribution apparatus corresponding to FIG. 2, according to an embodiment of this specification;
FIG. 7 is a schematic diagram illustrating a structure of a reward resource distribution apparatus corresponding to FIG. 3, according to an embodiment of this specification;
FIG. 8 is a schematic diagram illustrating a structure of a reward resource distribution device corresponding to FIG. 2, according to an embodiment of this specification; and
FIG. 9 is a schematic diagram illustrating a structure of a reward resource distribution device corresponding to FIG. 3, according to an embodiment of this specification.

### DETAILED DESCRIPTION OF EMBODIMENTS

To make the objectives, technical solutions, and advantages of one or more embodiments of this specification clearer, the technical solutions of the one or more embodiments of this specification are described clearly and completely below with reference to the specific embodiments of this specification and the corresponding accompanying drawings. Apparently, the described embodiments are merely some rather than all of the embodiments of this specification. All other embodiments derived by those of ordinary skill in the art on the basis of the embodiments of this specification without any creative efforts fall within the scope of protection of the one or more embodiments of this specification.

The technical solutions provided in the embodiments of this specification are described in detail below with reference to the accompanying drawings.

A mini program platform can usually open some of its interface technical capabilities to a mini program manager for calling, allowing the mini program manager to develop program files for plug-ins at a target mini program using various preset interfaces, so as to use the newly developed plug-ins to provide users with new services. Such a mini program configuration solution not only has high access costs, difficult operation, and low efficiency, but is also usually only applicable to mini program managers with research and development capabilities. However, the solution cannot meet the need of mini program managers with no research and development capabilities to deploy new plug-ins for mini programs they manage, resulting in poor versatility and a narrow application scope.

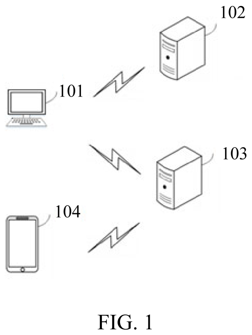

In order to address the defects in the related art, the following embodiment is presented in this solution. FIG. 1 is a schematic diagram illustrating an application scenario of a configuration method for a mini program plug-in, according to an embodiment of this specification.

As shown in FIG. 1, a mini program manager may perform a plug-in setting operation in a plug-in configuration page for a target mini program displayed at a device 101, where the plug-in setting operation may be an operation performed by triggering a preset control for setting service data or a service data display style at a target plug-in. The device 101 may then send operation information of the plug-in setting operation to a target server 102, such that the target server 102 can determine plug-in configuration information of the mini program manager for the target plug-in at the target mini program based on the operation information of the plug-in setting operation, where the plug-in configuration information may be used to indicate that target service data is to be displayed at the target plug-in according to a target display style.

Subsequently, when obtaining a publishing instruction of the mini program manager for the target plug-in that is sent by the device 101, the target server 102 may generate a plug-in page access address for the target plug-in according to the plug-in configuration information in response to the publishing instruction, where the plug-in page access address, when accessed by a terminal device, may be used to cause the terminal device to display a page of the target plug-in according to the plug-in configuration information; and send the plug-in page access address for the target plug-in to the device 101 of the mini program manager.

The mini program manager may generate a deployment instruction for the target plug-in in the device 101 based on the plug-in page access address, where the deployment instruction may be used to instruct to establish a call relationship between a target application control and the target plug-in, and the call relationship is used to cause the terminal device to, upon detecting that the target application control is triggered, display the page of the target plug-in based on the plug-in page access address. In addition, the mini program manager may further use the device 101 to send the deployment instruction to a device 103 at an organization for managing the target application control, such that the organization for managing the target application control can establish the call relationship between the target application control and the target plug-in based on the plug-in page access address. Subsequently, when a user triggers the target application control at a terminal device 104, the terminal device 104 can call the target plug-in according to the call relationship between the target application control and the plug-in page access address, so as to display the target service data in the target display style configured by the mini program manager.

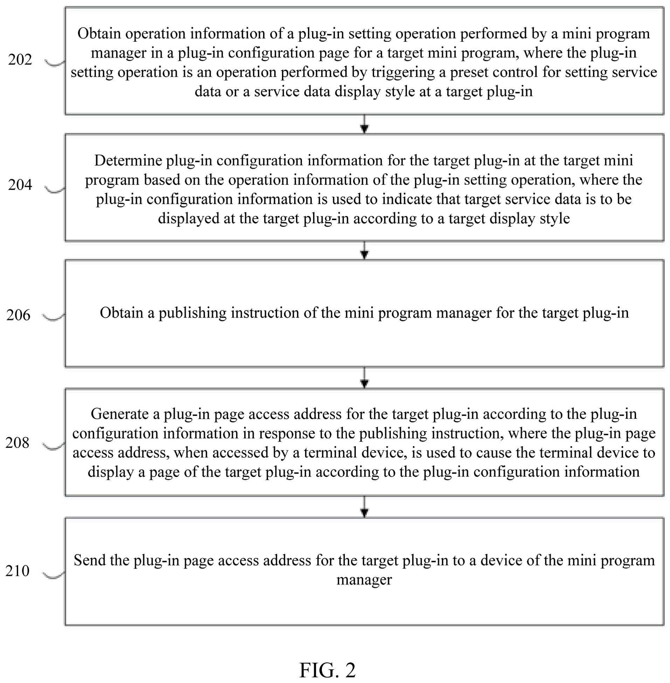

A configuration method for a mini program plug-in provided in an embodiment of this specification will be described in detail below with reference to the accompanying drawings. FIG. 2 is a schematic flowchart illustrating a configuration method for a mini program plug-in, according to an embodiment of this specification. From a program perspective, an execution body of the process may be a target server for providing a mini program plug-in configuration service, or an application that runs at the target server. As shown in FIG. 2, the process may include step 202 to step 210.

Step 202: Obtain operation information of a plug-in setting operation performed by a mini program manager in a plug-in configuration page for a target mini program, where the plug-in setting operation is an operation performed by triggering a preset control for setting service data or a service data display style at a target plug-in.

In an embodiment of this specification, the mini program manager may be an organization or individual for deploying a new plug-in at the target mini program to meet service requirements. Usually, the mini program manager may be an owner of the target mini program.

A plug-in management organization may provide a plug-in configuration application to the mini program manager so that the mini program manager can display the plug-in configuration page for the target mini program at the plug-in configuration application. In addition, the plug-in management organization may preset the target server for providing the mini program plug-in configuration service (i.e., the execution body of the solution of FIG. 2), and then uses the target server to communicate with the plug-in configuration application used by the mini program manager, to meet configuration requirements of the mini program manager for the target plug-in.

In an embodiment of this specification, when the mini program manager wants to add a target plug-in to the target mini program, the mini program manager may go to a visual plug-in configuration page for the target mini program that is displayed at the plug-in configuration application. The preset control for setting the service data or the service data display style at the target plug-in may be displayed in the plug-in configuration page. The mini program manager may trigger the preset control by methods such as clicking, information input, data upload, etc. to perform the plug-in setting operation for the target plug-in, which is convenient and quick. Subsequently, the plug-in configuration application, upon detecting the plug-in setting operation performed by the mini program manager, may send the operation information for reflecting the plug-in setting operation to the target server, such that the target server can obtain the operation information of the plug-in setting operation that is mentioned in step 202.

In practical applications, there may be multiple types of operation information of the plug-in setting operation. For example, if each preset control has a control unique identifier, when the plug-in setting operation is an operation performed by the mini program manager to enter target service data using the preset control, the operation information of the plug-in setting operation may include a control unique identifier of the preset control and the target service data. Alternatively, when the plug-in setting operation is an operation performed by the mini program manager to select a desired target display style using the preset control, the operation information of the plug-in setting operation may include a control unique identifier of the preset control and a style unique identifier of the target display style. When the target plug-in is composed of preset components, and each preset component may have a preset control for setting service data that the preset component needs to display, the operation information of the plug-in setting operation may further include a component unique identifier of a preset component to which the preset control triggered by the user belongs, which is not specifically limited.

Step 204: Determine plug-in configuration information for the target plug-in at the target mini program based on the operation information of the plug-in setting operation, where the plug-in configuration information is used to indicate that target service data is to be displayed at the target plug-in according to a target display style.

In an embodiment of this specification, the plug-in setting operation performed by the mini program manager is typically used to enter desired target service data to be displayed at the target plug-in, and a desired target display style to be used to display the target service data. Therefore, based on the operation information of the plug-in setting operation, the target server may determine the plug-in configuration information for indicating that the target service data is to be displayed at the target plug-in according to the target display style.

Step 206: Obtain a publishing instruction of the mini program manager for the target plug-in.

In an embodiment of this specification, after completing the configuration operation for the service data to be displayed at the target plug-in and the display style of the service data, the mini program manager may use the plug-in configuration application to generate and send the publishing instruction for the target plug-in at the target mini program to the target server.

Step 208: Generate a plug-in page access address for the target plug-in according to the plug-in configuration information in response to the publishing instruction, where the plug-in page access address, when accessed by a terminal device, is used to cause the terminal device to display a page of the target plug-in according to the plug-in configuration information.

In an embodiment of this specification, after receiving the publishing instruction for the target plug-in at the target mini program, the target server may generate data resources and program code resources required to run the target plug-in based on the plug-in configuration information, and determine the plug-in page access address for the target plug-in. In this way, after accessing the plug-in page access address for the target plug-in, the terminal device can obtain the data resources and the program code resources required to run the target plug-in, and can then display the page of the target plug-in to provide services for the user.

Step 210: Send the plug-in page access address for the target plug-in to a device of the mini program manager.

In an embodiment of this specification, the target server may further provide the plug-in page access address for the target plug-in to the mini program manager, such that the mini program manager may bind the plug-in page access address for the target plug-in to a target application control, and the page of the target plug-in can be displayed once the user triggers the target application control, thereby completing the deployment of the target plug-in at the target mini program.

According to the method of FIG. 2, the mini program manager can conveniently develop and configure the target plug-in at the target mini program by operating the preset controls in the visual plug-in configuration page, without the need to use a preset interface to develop program files of the target plug-in. This is conducive to reducing the costs and difficulty of plug-in development, thereby improving the ease of operation and efficiency of a configuration process for mini program plug-ins by the mini program manager. In addition, this is conducive to improving the scope of the plug-in configuration solution.

Based on the method of FIG. 2, some specific implementations of the method are further provided in the embodiments of this specification, which are described below.

In an embodiment of this specification, the target plug-in may generally be composed of one or more preset components, such that a first organization can launch a subscription event for a preset component collection according to actual needs, and the mini program manager can participate in the subscription event for a preset component collection to use preset components in the preset component collection to build the target plug-in at the target mini program.

Based on this, before step 202 of obtaining the operation information of the plug-in setting operation performed by the mini program manager in the plug-in configuration page for the target mini program, the method may further include: obtaining a subscription event launch request generated by a first organization for a preset component collection, where the preset component collection includes at least one preset component;
launching a subscription event for the preset component collection in response to the subscription event launch request;
obtaining a participation request from the mini program manager for the subscription event, where the participation request is used to request to utilize at least part of the preset components in the preset component collection to deploy the target plug-in at the target mini program; and
sending a page access address of the plug-in configuration page for the target mini program to the device of the mini program manager, if it is determined that the participation request is approved.

In an embodiment of this specification, the first organization may launch a subscription event for one or more preset components based on technical capabilities provided by the preset components, and after successfully participating in the subscription event, the mini program manager may use the preset components bound to the subscription event to build the target plug-in at the target mini program.

Specifically, the first organization may initiate a subscription event and set various preset components developed for the subscription event, and information required to be reported by the mini program manager to participate in the subscription event, such that the target server can launch a subscription event for a preset component collection for the first organization. The mini program manager can view event description information of the subscription event for the preset component collection at a specified application and choose whether to participate in the subscription event according to actual needs. If participating, the mini program manager may send a participation request for the subscription event to the target server for review. In practical applications, the event description information of the subscription event for the preset component collection may include functional information of the bound preset components. For example, the event description information may be: In this subscription event, you can order preset components for issuing electronic coupons and preset components for conducting membership business; so that each mini program manager can decide whether to participate in the subscription event.

The first organization and the plug-in management organization mentioned above may be either the same organization or different organizations, which is not specifically limited. The specified application used to obtain the event description information and the plug-in configuration application mentioned above may be either the same application or different applications, which is not specifically limited.

In an embodiment of this specification, the subscription event for the preset component collection may be a paid event, so that the mini program manager needs to pay a certain amount of payment resources to participate in the subscription event, and then use the preset components bound to the subscription event to build the target plug-in. Alternatively, the subscription event for the preset component collection may be a free event, so that the mini program manager can use the preset components bound to the subscription event to build the target plug-in for free, which is not specifically limited.

In an embodiment of this specification, in order to ensure the operational security of the target plug-in to be deployed by the mini program manager, information carried by the participation request of the mini program manager for the subscription event further needs to be reviewed.

Specifically, the participation request carries identity information of the mini program manager, a program unique identifier of the target mini program, and description information for the target service data.

Based on this, after the obtaining the participation request from the mini program manager for the subscription event, the method may further include: determining whether the mini program manager has the permission to deploy a plug-in for the target mini program, based on the identity information of the mini program manager and the program unique identifier of the target mini program, to obtain a first determining result;
if the first determining result indicates that the mini program manager does not have the permission to deploy a plug-in for the target mini program, generating a review result indicating that the participation request is not approved; or
if the first determining result indicates that the mini program manager has the permission to deploy a plug-in for the target mini program, determining whether it is allowed to display the target service data at the target plug-in deployed using the preset component collection, based on the description information for the target service data, to obtain a second determining result; and
if the second determining result indicates that it is allowed to display the target service data at the target plug-in deployed using the preset component collection, generating a review result indicating that the participation request is approved; or
if the second determining result indicates that it is not allowed to display the target service data at the target plug-in deployed using the preset component collection, generating a review result indicating that the participation request is not approved.

In an embodiment of this specification, the mini program manager is required to submit the identity information of the mini program manager and the program unique identifier of the target mini program when participating in the subscription event. The target server may obtain identity information of an organization/individual that sets a plug-in at the target mini program. If the identity information of the mini program manager is consistent with identity information of any organization/individual that sets a plug-in at the target mini program, it may indicate that there is a low risk for the mini program manager to deploy the plug-in at the target mini program, and then its participation request can be approved. The identity information of the mini program manager may include a name, an identity document (ID), etc. of the mini program manager. The program unique identifier of the target mini program may be used to uniquely identify the target mini program, and may be, for example, a name, an ID, etc. of the target mini program, which is not specifically limited.

In an embodiment of this specification, when participating in the subscription event, the mini program manager may be further required to submit description information of the target service data that the mini program manager expects to display at the target plug-in, so that the target server can review whether the target service data that the mini program manager expects to display contains any violation information, and whether the preset components bound to the subscription event are suitable for displaying the target service data. If so, it may indicate that there is a low risk for the mini program manager to deploy the plug-in at the target mini program, and then its participation request can be approved. There may be multiple types of description information for the target service data, for example, image data, text data, etc., which are not specifically limited.

In an embodiment of this specification, since the description information for the target service data at the target plug-in that is previously submitted by the mini program manager may not be consistent with target service data actually configured in the plug-in configuration page, it is further necessary to review the target service data actually set by the mini program manager.

Based on this, before step 208 of generating the plug-in page access address for the target plug-in according to the plug-in configuration information in response to the publishing instruction, the method may further include: reviewing the target service data to obtain a review result for the target service data; and
step 208 of generating the plug-in page access address for the target plug-in according to the plug-in configuration information in response to the publishing instruction may specifically include: if the review result for the target service data indicates that the review for the target service data is successful, generating the plug-in page access address for the target plug-in according to the plug-in configuration information in response to the publishing instruction.

However, if the review result for the target service data indicates that the review for the target service data is not successful, generating the plug-in page access address for the target plug-in may not be allowed.

In an embodiment of this specification, before publishing the subscription event for the preset component collection, the target server further needs to obtain plug-in configuration page data corresponding to the subscription event in advance, so as to use the plug-in configuration page data to display the plug-in configuration page used to configure the target plug-in to the mini program manager that successfully participates in the subscription event.

Based on this, before the launching the subscription event for the preset component collection in response to the subscription event launch request, the method may further include: storing plug-in configuration page data provided by a second organization, where the plug-in configuration page data is data required to display the plug-in configuration page; and
determining a first data access address for the plug-in configuration page data; and
the sending the page access address of the plug-in configuration page for the target mini program to the device of the mini program manager, if it is determined that the participation request is approved, includes: if it is determined that the participation request is approved, sending the first data access address for the plug-in configuration page data to the device of the mini program manager, where the device of the mini program manager is configured to access the first data access address to obtain the plug-in configuration page data, and utilize the plug-in configuration page data to display the plug-in configuration page.

In an embodiment of this specification, the second organization can package technical capabilities to be opened, such as a coupon issuance capability, a flash sale shopping capability, a data consulting capability, a membership management capability, etc., into preset components and provide them to the target server for use. Specifically, the second organization needs to develop component program files for each preset component in the preset component collection, and generate page data of the plug-in configuration page required to configure the preset component collection (i.e., the plug-in configuration page data). In actual applications, according to actual conditions, the second organization may further develop program files required to display the plug-in configuration page. In this case, the plug-in configuration page data may further include the program files required to display the plug-in configuration page, which is not specifically limited. The second organization and the plug-in management organization or the first organization mentioned above may be either the same organization or different organizations, which is not specifically limited.

Subsequently, the second organization needs to send the plug-in configuration page data to the target server, so that the target server can store the plug-in configuration page data locally and determine the first data access address for the locally stored plug-in configuration page data. After the mini program manager successfully participates in the subscription event for the preset component collection, the target server may communicate with the plug-in configuration application that runs at the device of the mini program manager, and send the first data access address for the plug-in configuration page data to the plug-in configuration application used by the mini program manager, such that when detecting that the mini program manager instructs to access the first data access address, the plug-in configuration application can obtain the plug-in configuration page data and then display the plug-in configuration page. Certainly, after receiving the first data access address, the plug-in configuration application may also automatically obtain the plug-in configuration page data to directly display the plug-in configuration page, thereby reducing operations to be performed by the mini program manager, which is convenient and quick.

In an embodiment of this specification, the target plug-in may be a plug-in built from one or more preset components in a preset component collection. Therefore, the plug-in configuration page may specifically display a preset control for setting service data or a service data display style at the preset components. Correspondingly, the plug-in setting operation may be an operation performed by triggering a preset control for setting service data or a service data display style at a preset component, and the plug-in configuration information is used to indicate that target service data is to be displayed at the preset component contained in the target plug-in, according to a target display style.

In practical applications, the plug-in configuration page may include a first area for displaying each of the preset controls and a second area for displaying a preview page of each of the preset components, where the preset control may include at least one of a first control for entering the target service data and a second control for selecting the target display style from a plurality of preset display styles, which is conducive to improving user experience.

In an embodiment of this specification, since the target plug-in may include one or more preset components, and each preset component may have one or more pages, the mini program manager may specify a homepage of the target plug-in, to generate address data for displaying the homepage of the target plug-in as the plug-in page access address for the target plug-in.

Specifically, step 208 of generating the plug-in page access address for the target plug-in according to the plug-in configuration information in response to the publishing instruction may include: determining a homepage of the target plug-in from a component page of the preset component contained in the target plug-in according to the plug-in configuration information; and
generating the plug-in page access address for the target plug-in based on a program unique identifier of the target mini program, a plug-in unique identifier of the target plug-in, and a preset page access address of the homepage.

In an embodiment of this specification, the mini program manager may specify a page of any one of the preset components included in the target plug-in as the homepage of the target plug-in; or if the mini program manager does not manually specify the homepage of the target plug-in, the homepage of the target plug-in may be automatically determined according to a preset rule, which is not specifically limited. In practical applications, a unique plug-in page access address may be preset for a page of each of the preset components, and then the preset page access address of the homepage of the target plug-in may be carried in the plug-in page access address for the target plug-in, such that the terminal device can determine a page of the target plug-in that needs to be first displayed (i.e., the homepage of the target plug-in) based on the preset page access address of the homepage of the target plug-in.

In addition, since the target plug-in is a plug-in set by the mini program manager for the target mini program, in order to prevent the mini program manager from abusing the target plug-in, the program unique identifier of the target mini program described above and the plug-in unique identifier of the target plug-in may be carried in the plug-in page access address for the target plug-in.

In an embodiment of this specification, since the terminal device needs to use program code of the target plug-in and page data to be displayed in addition to the plug-in page access address when displaying the target plug-in, an implementation is further provided that allows the terminal device to obtain the program code of the target plug-in and the page data to be displayed.

Specifically, after step 206 of obtaining the publishing instruction of the mini program manager for the target plug-in, the method may further include: storing plug-in page data of the target plug-in to a first server based on the plug-in configuration information, where the plug-in page data includes the target service data and style identification data of the target display style required to display the target service data;
generating a plug-in program file package of the target plug-in based on a second data access address of the plug-in page data and a component program file of the preset component contained in the target plug-in; and
storing the plug-in program file package of the target plug-in to a second server;
where the plug-in page access address, when accessed by the terminal device, is specifically used to cause the terminal device to download the plug-in program file package from the second server, and run the plug-in program file package to access the second data access address to obtain the plug-in page data, so as to utilize the plug-in page data to display the homepage of the target plug-in.

In an embodiment of this specification, the target plug-in may be an independently packaged software module used to carry capabilities or services of a service provider, so as to facilitate quick integration with other applications. A difference between the target plug-in and a common component is that the target plug-in can have an independent application and an independent context, that is, the target plug-in and an application deployed with the target plug-in each have their own independent server. Therefore, when the user wants to use the target plug-in to obtain services, the application deployed with the target plug-in needs to load and run the plug-in program file package of the target plug-in, and use the target plug-in to access the server of the service provider for services. Such a plug-in implementation packages the technical capabilities required for marketing/service cooperation into components of the mini program. Compared with conventional interface openness, the component-based approach is more mature, has more stable performance, a more unified experience, and is easier to scale.

In an embodiment of this specification, the plug-in configuration information typically includes plug-in page data of the target plug-in, and the mini program manager may specify the first server for storing the plug-in page data according to actual needs, such that a target application can store the plug-in page data to the first server, and determine the second data access address of the plug-in page data stored at the first server. When displaying the page of the target plug-in, the terminal device may utilize the second data access address to download the plug-in page data from the first server, so as to display the page of the target plug-in. In practical applications, the first server may typically include a server of the target mini program or a server of the host application of the target mini program, or certainly may be another server, which is not specifically limited.

In an embodiment of this specification, the target server may further store component program files of universal preset components provided by the second organization. Since the mini program manager may select part or all of the preset components from the preset component collection to build the target plug-in, component program files of the preset components actually selected by the mini program manager to build the target plug-in may be used, to generate the plug-in program file package of the target plug-in and store the plug-in program file package of the target plug-in to the second server. In practical applications, the second server for storing the plug-in program files of the target plug-in may usually be the server of the target mini program or the server of the host application of the target mini program, which is not specifically limited.

In practical applications, since data access addresses of plug-in page data required for target plug-ins built by different mini program managers are usually different, in order to ensure that the plug-in program file package of the target plug-in at the target mini program can obtain the required plug-in page data accurately during operation, the second data access address of the plug-in page data that is set by the mini program manager for the target plug-in may also be written into the plug-in program file package of the target plug-in.

When the terminal device accesses the plug-in page access address for the target plug-in at the target mini program, the terminal device can determine the homepage of the target plug-in based on a resolution result for the plug-in page access address, and go to the second server to download the plug-in program files of the target plug-in in real time. By running the plug-in program files of the target plug-in, the second data access address carried therein can be used to download from the first server the target service data to be displayed and the style identification data of the target display style to be used for the homepage of the target plug-in, and finally, the homepage of the target plug-in that is used to display the target service data according to the target display style is generated. Subsequently, based on the same principle, the user may also view and operate other pages of the target plug-in by triggering the target plug-in, which is convenient and quick.

In practical applications, if the terminal device has ever opened the target plug-in, the terminal device may already have stored the plug-in program files of the target plug-in locally. In this case, there is no need to download the plug-in program files of the target plug-in from the second server, but the local plug-in program files of the target plug-in can be directly called, which is conducive to saving device resources.

It can be seen that, in an embodiment of this specification, the terminal device may download the plug-in program files of the target plug-in in real time while running the target mini program or its host application, and there is no need to update the application version of the target mini program or its host application to include the plug-in program files of the target plug-in in the application installation package of the target mini program or its host application in advance, which is convenient and quick.

In practical applications, it may also be necessary to redirect to a specified page of the target mini program after some of the controls in the page of the target plug-in are triggered, so that the user can use the target mini program to obtain services. Based on this, the mini program manager can use a third control in the plug-in configuration page to configure a call relationship between a control in the page of the target plug-in and a specified page of the target mini program, such that the plug-in configuration information for the target plug-in at the target mini program and the plug-in page data for the target plug-in may further carry information reflecting the call relationship between the control in the page of the target plug-in and the specified page of the target mini program. This is not specifically limited.

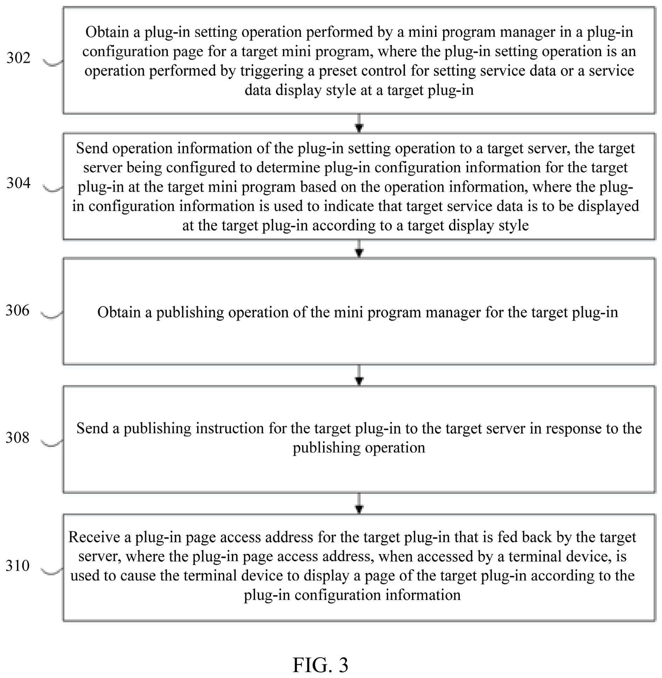

FIG. 3 is a schematic flowchart illustrating another configuration method for a mini program plug-in, according to an embodiment of this specification; From a program perspective, an execution body of the process may be a device of a mini program manager, or an application that runs at the device of the mini program manager. As shown in FIG. 3, the process may include step 302 to step 310.

Step 302: Obtain a plug-in setting operation performed by a mini program manager in a plug-in configuration page for a target mini program, where the plug-in setting operation is an operation performed by triggering a preset control for setting service data or a service data display style at a target plug-in.

In an embodiment of this specification, the plug-in configuration page and the plug-in setting operation mentioned in step 302 and in step 202 of the solution of FIG. 2 may be consistent. Details are omitted for simplicity.

Step 304: Send operation information of the plug-in setting operation to a target server, the target server being configured to determine plug-in configuration information for the target plug-in at the target mini program based on the operation information, where the plug-in configuration information is used to indicate that target service data is to be displayed at the target plug-in according to a target display style.

The operation information of the plug-in setting operation mentioned in step 304 and in step 202 of the solution of FIG. 2 may be consistent, and the target server in step 304 may be the execution body of the solution in the figure. Details are omitted for simplicity.

Step 306: Obtain a publishing operation of the mini program manager for the target plug-in.

In an embodiment of this specification, after configuring the service data and the service data display style required for the target plug-in at the target mini program, the mini program manager may further perform a publishing operation for the target plug-in in the plug-in configuration page for the target mini program, to indicate that the setting for the target plug-in is complete and that the plug-in page access address of the target plug-in needs to be obtained.

Step 308: Send a publishing instruction for the target plug-in to the target server in response to the publishing operation.

In an embodiment of this specification, the publishing instruction for the target plug-in mentioned in step 308 and in step 206 of the solution of FIG. 2 may be consistent. Details are omitted for simplicity.

Step 310: Receive a plug-in page access address for the target plug-in that is fed back by the target server, where the plug-in page access address, when accessed by a terminal device, is used to cause the terminal device to display a page of the target plug-in according to the plug-in configuration information.

In an embodiment of this specification, the plug-in page access address for the target plug-in mentioned in step 310 and in steps 208 and 210 of the solution of FIG. 2 may be consistent. Details are omitted for simplicity.

According to the method of FIG. 3, a plug-in configuration page that displays preset controls for setting service data and a service data display style at a target plug-in is provided to a mini program manager, and plug-in configuration information of the mini program manager for the target plug-in at a target mini program is determined based on operation information of a plug-in setting operation performed by the mini program manager using the preset controls, such that when the mini program manager instructs to publish the target plug-in, a plug-in page access address for the target plug-in can be generated according to the plug-in configuration information, which allows the mini program manager to directly use the plug-in page access address to deploy the target plug-in at the target mini program or another application. In this solution, the mini program manager can conveniently develop and configure the target plug-in at the target mini program by operating the preset controls in the plug-in configuration page, without the need to use a preset interface to develop program files of the target plug-in. This is conducive to improving the ease of operation and efficiency of a configuration process for mini program plug-ins by the mini program manager.

Based on the method of FIG. 3, some specific implementations of the method are further provided in the embodiments of this specification, which are described below.

A plug-in management organization may launch a subscription event for a preset component collection in advance. To use preset components in the preset component collection to build the target plug-in at the target mini program, the mini program manager may subscribe to the subscription event to obtain access to the plug-in configuration page for the target mini program.

Based on this, before step 302 of obtaining the plug-in setting operation performed by the mini program manager in the plug-in configuration page for the target mini program, the method may further include: obtaining a target trigger operation performed by the mini program manager for a subscription event of a preset component collection, where the preset component collection includes at least one preset component;
sending a participation request of the mini program manager for the subscription event to the target server in response to the target trigger operation, where the participation request is used to request to utilize at least part of the preset components in the preset component collection to deploy the target plug-in at the target mini program; and
receiving a page access address of the plug-in configuration page for the target mini program that is fed back by the target server, where the page access address is information fed back by the target server after it is determined that the participation request is approved. Alternatively, prompt information fed back by the target server to prompt that the subscription event cannot be participated in, where the prompt information is information fed back by the target server after it is determined that the participation request is not approved.

The obtaining the target trigger operation performed by the mini program manager for the subscription event of the preset component collection may specifically include: obtaining a submission operation of the mini program manager for data to be reviewed that is set in the subscription event, where the data to be reviewed includes identity information of the mini program manager, a program unique identifier of the target mini program, and description information for the target service data.

The sending the participation request of the mini program manager for the subscription event to the target server in response to the target trigger operation may specifically include: sending the participation request for the subscription event that carries the data to be reviewed to the target server in response to the submission operation.

In an embodiment of this specification, when requesting to participate in the subscription event for the preset component collection, the mini program manager usually needs to submit information such as the identity information of the mini program manager, the program unique identifier of the target mini program, and the description information for the target service data to be displayed at the target plug-in. The target application server may decide whether to allow the mini program manager to successfully participate in the subscription event based on the information submitted by the mini program manager.

In practical applications, the identity information of the mini program manager may include a name, an ID, application account information, etc. of the mini program manager; the program unique identifier of the target mini program may include information such as a name, an ID, or an application version of the target mini program; and the description information for the target service data to be displayed at the target plug-in should be consistent with the technical capabilities provided by the preset components to be used by the mini program manager. For example, when a preset component required by the mini program manager is a component for issuing an electronic coupon, the description information for the target service data to be displayed at the target plug-in may include description information for the electronic coupon that the mini program manager expects to issue; or when a preset component required by the mini program manager is a component for managing membership, the description information for the target service data to be displayed at the target plug-in may include description information for membership data to be displayed to member; and so on. This is not specifically limited.

In an embodiment of this specification, the plug-in configuration page may include a first area for displaying each of the preset controls, the preset control including at least one of a first control for entering the target service data to be displayed at the preset component in the target plug-in and a second control for selecting the target display style from a plurality of preset display styles.

Step 302 of obtaining the plug-in setting operation performed by the mini program manager in the plug-in configuration page for the target mini program may specifically include: obtaining an input operation performed for the target service data by the mini program manager using the first control; or obtaining a first selection operation performed for the target display style by the mini program manager using the second control.

In practical applications, the plug-in configuration page may further include a second area for displaying a preview page of each of the preset components.

Before step 302 of obtaining the plug-in setting operation performed by the mini program manager in the plug-in configuration page for the target mini program, the method may further include: obtaining a second selection operation of the mini program manager for a preview page of any one of the preset components displayed in the second area; and
displaying in the first area the preset control for setting the any one of the preset components, in response to the second selection operation.

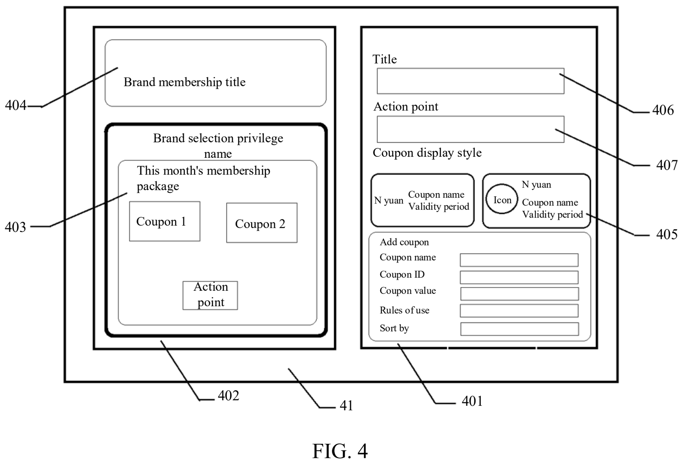

FIG. 4 is a schematic diagram illustrating a plug-in configuration page for a target mini program, according to an embodiment of this specification; As shown in FIG. 4, a plug-in configuration page 41 for a target mini program may include a first area 401 and a second area 402, where the second area 402 display a preview page of two preset components, namely, a preset component 403 for issuing coupons and a preset component 404 for displaying membership information. Assuming that the mini program manager performs a second selection operation for the preset component 403 for issuing coupons, the first area 401 may then display a first control 406 for entering target service data to be displayed by the preset component 403 and a second control 405 for selecting a target display style from a plurality of preset display styles.

In practical applications, when the user needs to redirect to a specified page of the target mini program by triggering the target plug-in, the component page of the preset component may further display an "action point control", and the first area 401 may display a third control 407 for setting the specified page of the target mini program to be displayed after the "action point control" is triggered. In addition, if the user needs to redirect to a specified page of the target mini program simply by triggering a received coupon, a control (not shown in FIG. 4) for configuring the redirected specified page of the target mini program for the coupon may further be added to the "Add coupon" section, which is convenient and quick.

In an embodiment of this specification, after obtaining the plug-in page access address for the target plug-in, the merchant usually needs to use the plug-in page access address to establish a call relationship between a target plug-in and a target application control, so that each user can call, by triggering the target application control, the target plug-in to obtain services provided by the target plug-in.

Based on this, after step 310 of receiving the plug-in page access address for the target plug-in that is fed back by the target server, the method may further include: generating a deployment instruction for the target plug-in based on the plug-in page access address, where the deployment instruction is used to instruct to establish a call relationship between a target application control and the target plug-in, and the call relationship is used to cause the terminal device to, upon detecting that the target application control is triggered, display the page of the target plug-in based on the plug-in page access address, where the target application control may be a control at the target mini program or a control at a host application of the target mini program; and
sending the deployment instruction to a device at an organization for managing the target application control.

In an embodiment of this specification, the plug-in page access address is generated based on a program unique identifier of the target mini program, a plug-in unique identifier of the target plug-in, and a preset page access address of a homepage of the target plug-in; and the terminal device is specifically configured to, upon detecting that the target application control is triggered, obtain a plug-in program file package of the target plug-in based on the plug-in page access address, and run the plug-in program file package to obtain plug-in page data of the target plug-in, so as to utilize the plug-in page data to display the homepage of the target plug-in; where the plug-in page data includes the target service data and style identification data of the target display style required to display the target service data, and the plug-in program file package is generated based on a data access address for the plug-in page data and a component program file of each preset component contained in the target plug-in.

In practical applications, the target application control may be the control at the target mini program or the control at the host application of the target mini program, so that the user can call the target plug-in during use of the target mini program or the host application of the target mini program, which is conducive to improving user experience.

Specifically, in an implementation 1, when the call relationship between the target application control at the target mini program and the target plug-in needs to be established, the mini program manager may send the deployment instruction for the target plug-in to the server of the target mini program. According to the deployment instruction, the server of the target mini program may establish a binding relationship between the target application control and the plug-in page access address for the target plug-in, so that when the user performs a trigger operation for the target application control at the target mini program, the target mini program can obtain from its server the plug-in page access address for the target plug-in that is bound to the target application control.

If the plug-in program file package for the target plug-in is stored on the server of the target mini program, the target mini program may automatically download and run a plug-in program file for the target plug-in to access a data access interface (e.g., the second data access interface shown in the solution of FIG. 2) for the plug-in page data of the target plug-in that is carried in the plug-in program file, and download the plug-in page data of the target plug-in, thereby displaying each page of the target plug-in.

Alternatively, to ensure the secure operation of the target plug-in, the plug-in program file of the target plug-in may also be stored on the server of the host application, such that the host application, upon detecting that the target application control is triggered, can also obtain the plug-in page access address for the target plug-in from the target mini program. After parsing the plug-in page access address, the host application can download the plug-in program file of the target plug-in from the server of the host application, so as to display the page of the target plug-in by running the plug-in program file.

In an implementation 2, when the call relationship between the target application control at the host application and the target plug-in needs to be established, the mini program manager may send the deployment instruction for the target plug-in to the server of the host application. According to the deployment instruction, the server of the host application may establish a binding relationship between the target application control and the plug-in page access address for the target plug-in, so that when the user performs a trigger operation for the target application control at the host application, the host application can obtain from its server the plug-in page access address for the target plug-in that is bound to the target application control. The plug-in page access address is parsed to download and run the plug-in program file of the target plug-in, so as to display each page of the target plug-in.

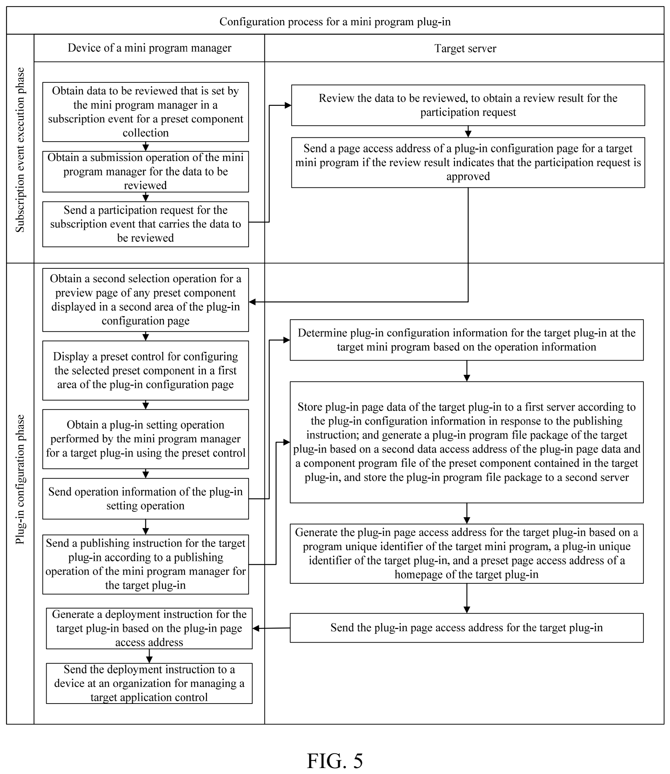

FIG. 5 is a schematic swimlane flowchart corresponding to the configuration methods for a mini program plug-in of FIG. 2 and FIG. 3, according to an embodiment of this specification. As shown in FIG. 5, the configuration process of the mini program plug-in may have execution bodies such as a device of a mini program manager and a target server.

During a subscription event execution phase, the device of the mini program manager may obtain data to be reviewed that is set by the mini program manager in a subscription event for a preset component collection, and obtain a submission operation of the mini program manager for the data to be reviewed, so as to send a participation request for the subscription event that carries the data to be reviewed to the target server. The data to be reviewed may include identity information of the mini program manager, a program unique identifier of the target mini program, description information for target service data to be displayed at a target plug-in, etc.

The target server may review the data to be reviewed, to obtain a review result for the participation request. If the review result indicates that the participation request is approved, a page access address of a plug-in configuration page for a target mini program is sent to the device of the mini program manager.

During a plug-in configuration phase, the device of the mini program manager may display the plug-in configuration page based on the page access address of the plug-in configuration page for the target mini program. If a second selection operation for a preview page of any preset component displayed in a second area of the plug-in configuration page is obtained, preset controls for configuring the selected preset component may be displayed in a first area of the plug-in configuration page. Subsequently, if a plug-in setting operation performed by the mini program manager for the target plug-in using the preset control is obtained, operation information of the plug-in setting operation may be sent to the target server, such that the target server can determine plug-in configuration information for the target plug-in at the target mini program based on the operation information.

In addition, the device of the mini program manager may further send a publishing instruction for the target plug-in to the target server according to a publishing operation of the mini program manager for the target plug-in, so that the target server can store plug-in page data of the target plug-in to a first server according to the plug-in configuration information in response to the publishing instruction; and generate a plug-in program file package of the target plug-in based on a second data access address of the plug-in page data and a component program file of the preset component contained in the target plug-in, to store the plug-in program file package to a second server. Further, the target server may generate and send the plug-in page access address for the target plug-in to the device of the mini program manager, based on a program unique identifier of the target mini program, a plug-in unique identifier of the target plug-in, and a preset page access address of a homepage of the target plug-in. In this way, the mini program manager may generate, at the device of the mini program manager, a deployment instruction for the target plug-in based on the plug-in page access address, and send the deployment instruction to a device at an organization for managing the target application control, thereby achieving the configuration and deployment of the target plug-in for the target mini program.

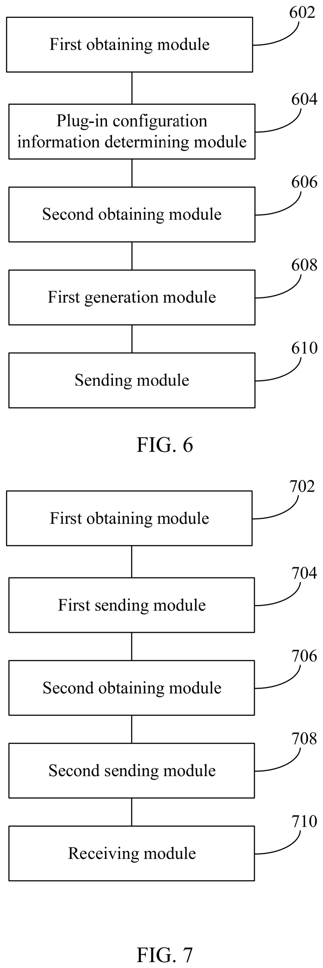

Based on the same idea, an embodiment of this specification further provides an apparatus corresponding to the above-described method. FIG. 6 is a schematic diagram illustrating a structure of a configuration apparatus for a mini program plug-in corresponding to FIG. 2, according to an embodiment of this specification. As shown in FIG. 6, the apparatus may include: a first obtaining module 602, configured to obtain operation information of a plug-in setting operation performed by a mini program manager in a plug-in configuration page for a target mini program, where the plug-in setting operation is an operation performed by triggering a preset control for setting service data or a service data display style at a target plug-in;
a plug-in configuration information determining module 604, configured to determine plug-in configuration information for the target plug-in at the target mini program based on the operation information of the plug-in setting operation, where the plug-in configuration information is used to indicate that target service data is to be displayed at the target plug-in according to a target display style;
a second obtaining module 606, configured to obtain a publishing instruction of the mini program manager for the target plug-in;
a first generation module 608, configured to generate a plug-in page access address for the target plug-in according to the plug-in configuration information in response to the publishing instruction, where the plug-in page access address, when accessed by a terminal device, is used to cause the terminal device to display a page of the target plug-in according to the plug-in configuration information; and
a sending module 610, configured to send the plug-in page access address for the target plug-in to a device of the mini program manager.

Based on the apparatus of FIG. 6, an embodiment of this specification further provides some specific implementations of the apparatus, which are described below.

Optionally, the plug-in configuration page may include a first area for displaying each of the preset controls and a second area for displaying a preview page of each of the preset components, where the preset control includes at least one of a first control for entering the target service data to be displayed at the preset component and a second control for selecting the target display style from a plurality of preset display styles, and the plug-in configuration information is used to indicate that the target service data is to be displayed at the preset component contained in the target plug-in, according to the target display style.

Optionally, the first generation module may be specifically configured to: determine a homepage of the target plug-in from a component page of the preset component contained in the target plug-in according to the plug-in configuration information; and
generate the plug-in page access address for the target plug-in based on a program unique identifier of the target mini program, a plug-in unique identifier of the target plug-in, and a preset page access address of the homepage.

Optionally, the apparatus of FIG. 6 may further include: a first storage module, configured to store plug-in page data of the target plug-in to a first server based on the plug-in configuration information, where the plug-in page data includes the target service data and style identification data of the target display style required to display the target service data;
a second generation module, configured to generate a plug-in program file package of the target plug-in based on a second data access address of the plug-in page data and a component program file of the preset component contained in the target plug-in; and
a second storage module, configured to store the plug-in program file package of the target plug-in to a second server;
where the plug-in page access address, when accessed by the terminal device, is specifically used to cause the terminal device to download the plug-in program file package from the second server, and run the plug-in program file package to access the second data access address to obtain the plug-in page data, so as to utilize the plug-in page data to display the homepage of the target plug-in.

Optionally, the apparatus of FIG. 6 may further include a launch request obtaining module, configured to obtain a subscription event launch request generated by a first organization for a preset component collection, where the preset component collection includes at least one preset component;
a subscription event launch module, configured to launch a subscription event for the preset component collection in response to the subscription event launch request;
a participation request obtaining module, configured to obtain a participation request from the mini program manager for the subscription event, where the participation request is used to request to utilize at least part of the preset components in the preset component collection to deploy the target plug-in at the target mini program; and
a page access address distribution module, configured to send a page access address of the plug-in configuration page for the target mini program to the device of the mini program manager, if it is determined that the participation request is approved.

Optionally, the participation request carries identity information of the mini program manager, a program unique identifier of the target mini program, and description information for the target service data.

Optionally, the apparatus of FIG. 6 may further include: a first determining module, configured to determine whether the mini program manager has the permission to deploy a plug-in for the target mini program, based on the identity information of the mini program manager and the program unique identifier of the target mini program, to obtain a first determining result;
a second determining module, configured to, if the first determining result indicates that the mini program manager has the permission to deploy a plug-in for the target mini program, determine whether it is allowed to display the target service data at the target plug-in deployed using the preset component collection, based on the description information for the target service data, to obtain a second determining result; and
a review result generation module, configured to, if the second determining result indicates that it is allowed to display the target service data at the target plug-in deployed using the preset component collection, generate a review result indicating that the participation request is approved.

Optionally, the apparatus of FIG. 6 may further include a target service data review module, configured to review the target service data to obtain a review result for the target service data.

The first generation module 608 may be specifically configured to, if the review result for the target service data indicates that the review for the target service data is successful, generate the plug-in page access address for the target plug-in according to the plug-in configuration information in response to the publishing instruction.

Based on the same idea, an embodiment of this specification further provides an apparatus corresponding to the above-described method. FIG. 7 is a schematic diagram illustrating a structure of a configuration apparatus for a mini program plug-in corresponding to FIG. 3, according to an embodiment of this specification. As shown in FIG. 7, the apparatus may include: a first obtaining module 702, configured to obtain a plug-in setting operation performed by a mini program manager in a plug-in configuration page for a target mini program, where the plug-in setting operation is an operation performed by triggering a preset control for setting service data or a service data display style at a target plug-in;
a first sending module 704, configured to send operation information of the plug-in setting operation to a target server, the target server being configured to determine plug-in configuration information for the target plug-in at the target mini program based on the operation information, where the plug-in configuration information is used to indicate that target service data is to be displayed at the target plug-in according to a target display style;
a second obtaining module 706, configured to obtain a publishing operation of the mini program manager for the target plug-in;
a second sending module 708, configured to send a publishing instruction for the target plug-in to the target server in response to the publishing operation; and
a receiving module 710, configured to receive a plug-in page access address for the target plug-in that is fed back by the target server, where the plug-in page access address, when accessed by a terminal device, is used to cause the terminal device to display a page of the target plug-in according to the plug-in configuration information.

Based on the apparatus of FIG. 7, an embodiment of this specification further provides some specific implementations of the apparatus, which are described below.

Optionally, the plug-in configuration page may include a first area for displaying each of the preset controls, the preset control including at least one of a first control for entering the target service data to be displayed at the preset component in the target plug-in and a second control for selecting the target display style from a plurality of preset display styles.

The first obtaining module may be specifically configured to obtain an input operation performed for the target service data by the mini program manager using the first control; or obtain a first selection operation performed for the target display style by the mini program manager using the second control.

Optionally, the plug-in configuration page may further include a second area for displaying a preview page of each of the preset components. The apparatus of FIG. 7 further includes: a third obtaining module, configured to obtain a second selection operation of the mini program manager for a preview page of any one of the preset components displayed in the second area; and
a preset control display module, configured to display in the first area the preset control for setting the any one of the preset components, in response to the second selection operation.

Optionally, the apparatus of FIG. 7 may further include: a deployment instruction generation module, configured to generate a deployment instruction for the target plug-in based on the plug-in page access address, where the deployment instruction is used to instruct to establish a call relationship between a target application control and the target plug-in, the call relationship is used to cause the terminal device to, upon detecting that the target application control is triggered, display the page of the target plug-in based on the plug-in page access address, and the target application control is a control at the target mini program or a control at a host application of the target mini program; and
a third sending module, configured to send the deployment instruction to a device at an organization for managing the target application control; where the plug-in page access address is generated based on a program unique identifier of the target mini program, a plug-in unique identifier of the target plug-in, and a preset page access address of a homepage of the target plug-in; and the terminal device is specifically configured to, upon detecting that the target application control is triggered, obtain a plug-in program file package of the target plug-in based on the plug-in page access address, and run the plug-in program file package to obtain plug-in page data of the target plug-in, so as to utilize the plug-in page data to display the homepage of the target plug-in; the plug-in page data includes the target service data and style identification data of the target display style required to display the target service data, and the plug-in program file package is generated based on a data access address for the plug-in page data and a component program file of each preset component contained in the target plug-in.

Optionally, the apparatus of FIG. 7 may further include: a target trigger operation obtaining module, configured to obtain a target trigger operation performed by the mini program manager for a subscription event of a preset component collection, where the preset component collection includes at least one preset component;
a participation request sending module, configured to send a participation request of the mini program manager for the subscription event to the target server in response to the target trigger operation, where the participation request is used to request to utilize at least part of the preset components in the preset component collection to deploy the target plug-in at the target mini program; and
a page access address receiving module, configured to receive a page access address of the plug-in configuration page for the target mini program that is fed back by the target server, where the page access address is information fed back by the target server after it is determined that the participation request is approved.

Optionally, the target trigger operation obtaining module may be specifically configured to obtain a submission operation of the mini program manager for data to be reviewed that is set in the subscription event, where the data to be reviewed includes identity information of the mini program manager, a program unique identifier of the target mini program, and description information for the target service data.

The participation request sending module may be specifically configured to send the participation request for the subscription event that carries the data to be reviewed to the target server in response to the submission operation.

Based on the same idea, an embodiment of this specification further provides a device corresponding to the above-described method.

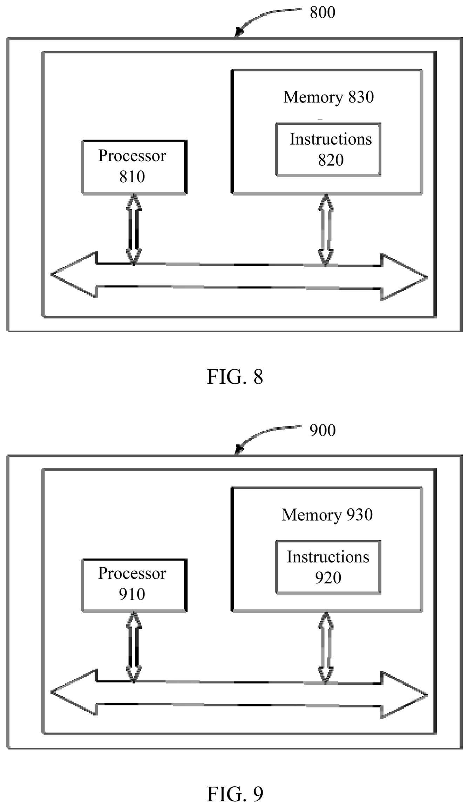

FIG. 8 is a schematic diagram illustrating a structure of a configuration device for a mini program plug-in corresponding to FIG. 2, according to an embodiment of this specification. As shown in FIG. 8, the device 800 may include: at least one processor 810; and a memory 830 communicatively connected to the at least one processor, where the memory 830 stores instructions 820 executable by the at least one processor 810, and the instructions are executed by the at least one processor 810, to cause the at least one processor 810 to: obtain operation information of a plug-in setting operation performed by a mini program manager in a plug-in configuration page for a target mini program, where the plug-in setting operation is an operation performed by triggering a preset control for setting service data or a service data display style at a target plug-in;
determine plug-in configuration information for the target plug-in at the target mini program based on the operation information of the plug-in setting operation, where the plug-in configuration information is used to indicate that target service data is to be displayed at the target plug-in according to a target display style;
obtain a publishing instruction of the mini program manager for the target plug-in;
generate a plug-in page access address for the target plug-in according to the plug-in configuration information in response to the publishing instruction, where the plug-in page access address, when accessed by a terminal device, is used to cause the terminal device to display a page of the target plug-in according to the plug-in configuration information; and
send the plug-in page access address for the target plug-in to a device of the mini program manager.

Based on the same idea, an embodiment of this specification further provides a device corresponding to the above-described method.

FIG. 9 is a schematic diagram illustrating a structure of a configuration device for a mini program plug-in corresponding to FIG. 2, according to an embodiment of this specification. As shown in FIG. 9, the device 900 may include: at least one processor 910; and a memory 930 communicatively connected to the at least one processor, where the memory 930 stores instructions 920 executable by the at least one processor 910, and the instructions are executed by the at least one processor 910, to cause the at least one processor 910 to: obtain a plug-in setting operation performed by a mini program manager in a plug-in configuration page for a target mini program, where the plug-in setting operation is an operation performed by triggering a preset control for setting service data or a service data display style at a target plug-in;
send operation information of the plug-in setting operation to a target server, the target server being configured to determine plug-in configuration information for the target plug-in at the target mini program based on the operation information, where the plug-in configuration information is used to indicate that target service data is to be displayed at the target plug-in according to a target display style;
obtain a publishing operation of the mini program manager for the target plug-in;
send a publishing instruction for the target plug-in to the target server in response to the publishing operation; and
receive a plug-in page access address for the target plug-in that is fed back by the target server, where the plug-in page access address, when accessed by a terminal device, is used to cause the terminal device to display a page of the target plug-in according to the plug-in configuration information.

The embodiments of this specification are described in a progressive way. For the same or similar parts of the embodiments, mutual references can be made to the embodiments. Each embodiment focuses on a difference from other embodiments. In particular, for the devices shown in FIG. 8 and FIG. 9, because they are basically similar to the method embodiments, description is relatively simple. For related parts, refer to the description of the method embodiments.

In the 1990s, an improvement in a technology could be clearly distinguished as a hardware improvement (for example, an improvement in circuit structures such as diodes, transistors, switches, etc.) or a software improvement (an improvement in method processes). However, with the development of technology, many improvements in current method processes can be considered as direct improvements in hardware circuit structures. Designers almost always obtain the corresponding hardware circuit structures by programming the improved method processes into the hardware circuits. Therefore, it is not true that an improvement in a method process cannot be achieved using hardware entity modules. For example, a programmable logic device (PLD) (such as a field programmable gate array (FPGA)) is such an integrated circuit whose logic function is determined by the user programming the device. Designers can "integrate" a digital system on a PLD by programming it themselves, with no need to ask a chip manufacturer to design and produce a dedicated integrated circuit chip. Moreover, nowadays, instead of manually fabricating integrated circuit chips, such programming is mostly implemented with "logic compiler" software, which is similar to the software compiler used when developing and writing programs. To compile the original code, the code must also be written in a specific programming language, which is called Hardware Description Language (HDL). There is not only one HDL, but many types, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc. The most commonly used ones are VHDL (Very-High-Speed Integrated Circuit Hardware Description Language) and Verilog. Those skilled in the art should also be aware that it is easy to obtain a hardware circuit that implements the logical method process by simply performing some logic programming on the method process using the above-mentioned hardware description languages and programming it into an integrated circuit.

The controller may be implemented in any suitable manner. For example, the controller may take the form of, for example, a microprocessor or a processor and a computer-readable medium storing computer-readable program code (such as software or firmware) executable by the (micro)processor, a logic gate, a switch, an application specific integrated circuit (ASIC), a programmable logic controller and an embedded microcontroller. Examples of the controller include, but are not limited to, the following microcontrollers: ARC 625D, Atmel AT91SAM, Microchip PIC18F26K20, and Silicone Labs C8051F320. The memory controller may also be implemented as part of the control logic of the memory. Those skilled in the art are also aware that in addition to implementing the controller in purely computer-readable program code, it is entirely possible to implement the same function by logically programming the method steps so that the controller is in the form of logic gates, switches, application specific integrated circuits, programmable logic controllers, and embedded microcontrollers. Therefore, such a controller can be considered as a hardware component, and the devices included therein for realizing various functions can also be considered as structures within the hardware component. Or even, the means for realizing various functions may be considered as both a software module for implementing the method and a structure within a hardware component.

The systems, apparatuses, modules, or units described in the above embodiments may be implemented by computer chips or entities, or by products with certain functions. A typical implementation device is a computer. Specifically, the computer may be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, when described, the above apparatus is divided into various units based on functions. Certainly, functions of the units may be implemented in one or more pieces of software and/or hardware when this application is implemented.

Those skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided to a processor of a general-purpose computer, a special-purpose computer, an embedded processor, or another programmable data processing device to generate a machine, such that the instructions executed by the processor of the computer or another programmable data processing device generate an apparatus for implementing a specific function in one or more procedures in the flowcharts and/or one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPUs), input/output interfaces, network interfaces, and memories.

A memory may include a non-permanent storage, a random access memory (RAM) and/or a non-volatile memory, etc. in a computer-readable medium, such as a read-only memory (ROM) or a flash memory (flash RAM). A memory is an example of the computer-readable medium.

A computer-readable medium includes permanent and non-permanent, removable and non-removable media and may implement information storage by using any method or technology. Information may be computer-readable instructions, data structures, modules of a program, or other data. Examples of the computer storage medium include but are not limited to a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, tape or disk storage or other magnetic storage devices, or any other non-transmission media that may be used to store information capable of being accessed by a computing device. According to the definition herein, the computer-readable medium does not include a transitory computer-readable medium, such as a modulated data signal and carrier.

It should be further noted that, the terms "include", "comprise", or any other variants thereof are intended to cover a non-exclusive inclusion, so that a process, a method, a product, or a device that includes a list of elements not only includes those elements but also includes other elements that are not listed, or further includes elements inherent to such a process, method, product, or device. In the absence of more restrictions, an element defined by "including a ..." does not exclude another same element in a process, method, product, or device that includes the element.

Those skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product implemented on one or more computer-usable storage media (including but not limited to a disk memory, a CD-ROM, an optical memory, and the like) that include computer-usable program code.

This application may be described in a general context of a computer executable instruction executed by a computer, for example, a program module. Generally, the program modules include routines, programs, objects, components, data structures, etc. that perform particular tasks or implement particular abstract data types. This application may also be practiced in distributed computing environments where tasks are performed by remote processing devices that are connected through a communications network. In a distributed computing environment, the program modules may be located in local and remote computer storage media including the storage devices.

The foregoing description is merely embodiments of this application, and is not intended to limit this application. Various changes and modifications may be made to this application by those skilled in the art. Any modifications, equivalent substitutions, improvements, etc. made within the spirit and principle of this application shall be included in the scope of the claims of this application.

## Claims

1. A configuration method for a mini program plug-in, comprising:
obtaining operation information of a plug-in setting operation performed by a mini program manager in a plug-in configuration page for a target mini program, wherein the plug-in setting operation is an operation performed by triggering a preset control for setting service data or a service data display style at a target plug-in;
determining plug-in configuration information for the target plug-in at the target mini program based on the operation information of the plug-in setting operation, wherein the plug-in configuration information is used to indicate that target service data is to be displayed at the target plug-in according to a target display style;
obtaining a publishing instruction of the mini program manager for the target plug-in;
generating a plug-in page access address for the target plug-in according to the plug-in configuration information in response to the publishing instruction, wherein the plug-in page access address, when accessed by a terminal device, is used to cause the terminal device to display a page of the target plug-in according to the plug-in configuration information; and
sending the plug-in page access address for the target plug-in to a device of the mini program manager.

2. The method according to claim 1, wherein before the obtaining the operation information of the plug-in setting operation performed by the mini program manager in the plug-in configuration page for the target mini program, the method further comprises:
obtaining a subscription event launch request generated by a first organization for a preset component collection, wherein the preset component collection comprises at least one preset component;
launching a subscription event for the preset component collection in response to the subscription event launch request;
obtaining a participation request from the mini program manager for the subscription event, wherein the participation request is used to request to utilize at least part of the preset components in the preset component collection to deploy the target plug-in at the target mini program; and
sending a page access address of the plug-in configuration page for the target mini program to the device of the mini program manager, if it is determined that the participation request is approved.

3. The method according to claim 2, wherein the participation request carries identity information of the mini program manager, a program unique identifier of the target mini program, and description information for the target service data; and
after the obtaining the participation request from the mini program manager for the subscription event, the method further comprises:
determining whether the mini program manager has permission to deploy a plug-in for the target mini program, based on the identity information of the mini program manager and the program unique identifier of the target mini program, to obtain a first determining result;
if the first determining result indicates that the mini program manager has the permission to deploy a plug-in for the target mini program, determining whether it is allowed to display the target service data at the target plug-in deployed using the preset component collection, based on the description information for the target service data, to obtain a second determining result; and
if the second determining result indicates that it is allowed to display the target service data at the target plug-in deployed using the preset component collection, generating a review result indicating that the participation request is approved.

4. The method according to claim 2, wherein before the launching the subscription event for the preset component collection in response to the subscription event launch request, the method further comprises:
storing plug-in configuration page data provided by a second organization, wherein the plug-in configuration page data is data required to display the plug-in configuration page; and
determining a first data access address for the plug-in configuration page data; and
the sending the page access address of the plug-in configuration page for the target mini program to the device of the mini program manager, if it is determined that the participation request is approved, comprises:
if it is determined that the participation request is approved, sending the first data access address for the plug-in configuration page data to the device of the mini program manager, wherein the device of the mini program manager is configured to access the first data access address to obtain the plug-in configuration page data, and utilize the plug-in configuration page data to display the plug-in configuration page.

5. The method according to claim 1, wherein the plug-in setting operation is an operation performed by triggering a preset control for setting service data or a service data display style at a preset component, and the plug-in configuration information is used to indicate that target service data is to be displayed at the preset component contained in the target plug-in, according to a target display style; and
the generating the plug-in page access address for the target plug-in according to the plug-in configuration information in response to the publishing instruction comprises:
determining a homepage of the target plug-in from a component page of the preset component contained in the target plug-in according to the plug-in configuration information; and
generating the plug-in page access address for the target plug-in based on a program unique identifier of the target mini program, a plug-in unique identifier of the target plug-in, and a preset page access address of the homepage.

6. The method according to claim 5, wherein after the obtaining the publishing instruction of the mini program manager for the target plug-in, the method further comprises:
storing plug-in page data of the target plug-in to a first server based on the plug-in configuration information, wherein the plug-in page data comprises the target service data and style identification data of the target display style required to display the target service data;
generating a plug-in program file package of the target plug-in based on a second data access address of the plug-in page data and a component program file of the preset component contained in the target plug-in; and
storing the plug-in program file package of the target plug-in to a second server;
wherein the plug-in page access address, when accessed by the terminal device, is specifically used to cause the terminal device to download the plug-in program file package from the second server, and run the plug-in program file package to access the second data access address to obtain the plug-in page data, so as to utilize the plug-in page data to display the homepage of the target plug-in.

7. The method according to claim 5, wherein the plug-in configuration page comprises a first area for displaying each of the preset controls and a second area for displaying a preview page of each of the preset components, wherein the preset control comprises at least one of a first control for entering the target service data and a second control for selecting the target display style from a plurality of preset display styles.

8. The method according to claim 1, wherein before the generating the plug-in page access address for the target plug-in according to the plug-in configuration information in response to the publishing instruction, the method further comprises:
reviewing the target service data to obtain a review result for the target service data; and
the generating the plug-in page access address for the target plug-in according to the plug-in configuration information in response to the publishing instruction comprises:
if the review result for the target service data indicates that the review for the target service data is successful, generating the plug-in page access address for the target plug-in according to the plug-in configuration information in response to the publishing instruction.

9. A configuration method for a mini program plug-in, comprising:
obtaining a plug-in setting operation performed by a mini program manager in a plug-in configuration page for a target mini program, wherein the plug-in setting operation is an operation performed by triggering a preset control for setting service data or a service data display style at a target plug-in;
sending operation information of the plug-in setting operation to a target server, the target server being configured to determine plug-in configuration information for the target plug-in at the target mini program based on the operation information, wherein the plug-in configuration information is used to indicate that target service data is to be displayed at the target plug-in according to a target display style;
obtaining a publishing operation of the mini program manager for the target plug-in;
sending a publishing instruction for the target plug-in to the target server in response to the publishing operation; and
receiving a plug-in page access address for the target plug-in that is fed back by the target server, wherein the plug-in page access address, when accessed by a terminal device, is used to cause the terminal device to display a page of the target plug-in according to the plug-in configuration information.

10. The method according to claim 9, wherein before the obtaining the plug-in setting operation performed by the mini program manager in the plug-in configuration page for the target mini program, the method further comprises:
obtaining a target trigger operation performed by the mini program manager for a subscription event of a preset component collection, wherein the preset component collection comprises at least one preset component;
sending a participation request of the mini program manager for the subscription event to the target server in response to the target trigger operation, wherein the participation request is used to request to utilize at least part of the preset components in the preset component collection to deploy the target plug-in at the target mini program; and
receiving a page access address of the plug-in configuration page for the target mini program that is fed back by the target server, wherein the page access address is information fed back by the target server after it is determined that the participation request is approved.

11. The method according to claim 10, wherein the obtaining the target trigger operation performed by the mini program manager for the subscription event of the preset component collection comprises:
obtaining a submission operation of the mini program manager for data to be reviewed that is set in the subscription event, wherein the data to be reviewed comprises identity information of the mini program manager, a program unique identifier of the target mini program, and description information for the target service data; and
the sending the participation request of the mini program manager for the subscription event to the target server in response to the target trigger operation comprises:
sending the participation request for the subscription event that carries the data to be reviewed to the target server in response to the submission operation.

12. The method according to claim 9, wherein the plug-in configuration page comprises a first area for displaying each of the preset controls, the preset control comprising at least one of a first control for entering the target service data to be displayed at the preset component in the target plug-in and a second control for selecting the target display style from a plurality of preset display styles; and
the obtaining the plug-in setting operation performed by the mini program manager in the plug-in configuration page for the target mini program comprises:
obtaining an input operation performed for the target service data by the mini program manager using the first control; or
obtaining a first selection operation performed for the target display style by the mini program manager using the second control.

13. The method according to claim 12, wherein the plug-in configuration page further comprises a second area for displaying a preview page of each of the preset components; and
before the obtaining the plug-in setting operation performed by the mini program manager in the plug-in configuration page for the target mini program, the method further comprises:
obtaining a second selection operation of the mini program manager for a preview page of any one of the preset components displayed in the second area; and
displaying in the first area the preset control for setting the any one of the preset components, in response to the second selection operation.

14. The method according to claim 9, wherein after the receiving the plug-in page access address for the target plug-in that is fed back by the target server, the method further comprises:
generating a deployment instruction for the target plug-in based on the plug-in page access address, wherein the deployment instruction is used to instruct to establish a call relationship between a target application control and the target plug-in, and the call relationship is used to cause the terminal device to, upon detecting that the target application control is triggered, display the page of the target plug-in based on the plug-in page access address; and
sending the deployment instruction to a device at an organization for managing the target application control.

15. The method according to claim 14, wherein the target application control is a control at the target mini program or a control at a host application of the target mini program.

16. The method according to claim 14, wherein the plug-in page access address is generated based on a program unique identifier of the target mini program, a plug-in unique identifier of the target plug-in, and a preset page access address of a homepage of the target plug-in; and
the terminal device is specifically configured to, upon detecting that the target application control is triggered, obtain a plug-in program file package of the target plug-in based on the plug-in page access address, and run the plug-in program file package to obtain plug-in page data of the target plug-in, so as to utilize the plug-in page data to display the homepage of the target plug-in;
wherein the plug-in page data comprises the target service data and style identification data of the target display style required to display the target service data, and the plug-in program file package is generated based on a data access address for the plug-in page data and a component program file of each preset component contained in the target plug-in.

17. A configuration apparatus for a mini program plug-in, comprising:
a first obtaining module, configured to obtain operation information of a plug-in setting operation performed by a mini program manager in a plug-in configuration page for a target mini program, wherein the plug-in setting operation is an operation performed by triggering a preset control for setting service data or a service data display style at a target plug-in;
a plug-in configuration information determining module, configured to determine plug-in configuration information for the target plug-in at the target mini program based on the operation information of the plug-in setting operation, wherein the plug-in configuration information is used to indicate that target service data is to be displayed at the target plug-in according to a target display style;
a second obtaining module, configured to obtain a publishing instruction of the mini program manager for the target plug-in;
a first generation module, configured to generate a plug-in page access address for the target plug-in according to the plug-in configuration information in response to the publishing instruction, wherein the plug-in page access address, when accessed by a terminal device, is used to cause the terminal device to display a page of the target plug-in according to the plug-in configuration information; and
a sending module, configured to send the plug-in page access address for the target plug-in to a device of the mini program manager.

18. The apparatus according to claim 17, wherein the plug-in configuration page comprises a first area for displaying each of the preset controls and a second area for displaying a preview page of each of the preset components, wherein the preset control comprises at least one of a first control for entering the target service data to be displayed at the preset component and a second control for selecting the target display style from a plurality of preset display styles, and the plug-in configuration information is used to indicate that the target service data is to be displayed at the preset component contained in the target plug-in, according to the target display style; and
the first generation module is specifically configured to:
determine a homepage of the target plug-in from a component page of the preset component contained in the target plug-in according to the plug-in configuration information; and
generate the plug-in page access address for the target plug-in based on a program unique identifier of the target mini program, a plug-in unique identifier of the target plug-in, and a preset page access address of the homepage.

19. The apparatus according to claim 18, further comprising:
a first storage module, configured to store plug-in page data of the target plug-in to a first server based on the plug-in configuration information, wherein the plug-in page data comprises the target service data and style identification data of the target display style required to display the target service data;
a second generation module, configured to generate a plug-in program file package of the target plug-in based on a second data access address of the plug-in page data and a component program file of the preset component contained in the target plug-in; and
a second storage module, configured to store the plug-in program file package of the target plug-in to a second server;
wherein the plug-in page access address, when accessed by the terminal device, is specifically used to cause the terminal device to download the plug-in program file package from the second server, and run the plug-in program file package to access the second data access address to obtain the plug-in page data, so as to utilize the plug-in page data to display the homepage of the target plug-in.

20. A configuration apparatus for a mini program plug-in, comprising:
a first obtaining module, configured to obtain a plug-in setting operation performed by a mini program manager in a plug-in configuration page for a target mini program, wherein the plug-in setting operation is an operation performed by triggering a preset control for setting service data or a service data display style at a target plug-in;
a first sending module, configured to send operation information of the plug-in setting operation to a target server, the target server being configured to determine plug-in configuration information for the target plug-in at the target mini program based on the operation information, wherein the plug-in configuration information is used to indicate that target service data is to be displayed at the target plug-in according to a target display style;
a second obtaining module, configured to obtain a publishing operation of the mini program manager for the target plug-in;
a second sending module, configured to send a publishing instruction for the target plug-in to the target server in response to the publishing operation; and
a receiving module, configured to receive a plug-in page access address for the target plug-in that is fed back by the target server, wherein the plug-in page access address, when accessed by a terminal device, is used to cause the terminal device to display a page of the target plug-in according to the plug-in configuration information.

21. The apparatus according to claim 20, wherein the plug-in configuration page comprises a first area for displaying each of the preset controls, the preset control comprising at least one of a first control for entering the target service data to be displayed at the preset component in the target plug-in and a second control for selecting the target display style from a plurality of preset display styles; and
the first obtaining module is specifically configured to:
obtain an input operation performed for the target service data by the mini program manager using the first control; or
obtain a first selection operation performed for the target display style by the mini program manager using the second control.

22. The apparatus according to claim 21, wherein the plug-in configuration page further comprises a second area for displaying a preview page of each of the preset components; and
the apparatus further comprises:
a third obtaining module, configured to obtain a second selection operation of the mini program manager for a preview page of any one of the preset components displayed in the second area; and
a preset control display module, configured to display in the first area the preset control for setting the any one of the preset components, in response to the second selection operation.

23. The apparatus according to claim 21, further comprising:
a deployment instruction generation module, configured to generate a deployment instruction for the target plug-in based on the plug-in page access address, wherein the deployment instruction is used to instruct to establish a call relationship between a target application control and the target plug-in, the call relationship is used to cause the terminal device to, upon detecting that the target application control is triggered, display the page of the target plug-in based on the plug-in page access address, and the target application control is a control at the target mini program or a control at a host application of the target mini program; and
a third sending module, configured to send the deployment instruction to a device at an organization for managing the target application control;
wherein the plug-in page access address is generated based on a program unique identifier of the target mini program, a plug-in unique identifier of the target plug-in, and a preset page access address of a homepage of the target plug-in; and the terminal device is specifically configured to, upon detecting that the target application control is triggered, obtain a plug-in program file package of the target plug-in based on the plug-in page access address, and run the plug-in program file package to obtain plug-in page data of the target plug-in, so as to utilize the plug-in page data to display the homepage of the target plug-in; the plug-in page data comprises the target service data and style identification data of the target display style required to display the target service data, and the plug-in program file package is generated based on a data access address for the plug-in page data and a component program file of each preset component contained in the target plug-in.

24. A configuration device for a mini program plug-in, comprising:
at least one processor; and
a memory communicatively connected to the at least one processor, wherein
the memory stores instructions executable by the at least one processor, and the instructions are executed by the at least one processor, to cause the at least one processor to:
obtain operation information of a plug-in setting operation performed by a mini program manager in a plug-in configuration page for a target mini program, wherein the plug-in setting operation is an operation performed by triggering a preset control for setting service data or a service data display style at a target plug-in;
determine plug-in configuration information for the target plug-in at the target mini program based on the operation information of the plug-in setting operation, wherein the plug-in configuration information is used to indicate that target service data is to be displayed at the target plug-in according to a target display style;
obtain a publishing instruction of the mini program manager for the target plug-in;
generate a plug-in page access address for the target plug-in according to the plug-in configuration information in response to the publishing instruction, wherein the plug-in page access address, when accessed by a terminal device, is used to cause the terminal device to display a page of the target plug-in according to the plug-in configuration information; and
send the plug-in page access address for the target plug-in to a device of the mini program manager.

25. A configuration device for a mini program plug-in, comprising:
at least one processor; and
a memory communicatively connected to the at least one processor, wherein
the memory stores instructions executable by the at least one processor, and the instructions are executed by the at least one processor, to cause the at least one processor to:
obtain a plug-in setting operation performed by a mini program manager in a plug-in configuration page for a target mini program, wherein the plug-in setting operation is an operation performed by triggering a preset control for setting service data or a service data display style at a target plug-in;
send operation information of the plug-in setting operation to a target server, the target server being configured to determine plug-in configuration information for the target plug-in at the target mini program based on the operation information, wherein the plug-in configuration information is used to indicate that target service data is to be displayed at the target plug-in according to a target display style;
obtain a publishing operation of the mini program manager for the target plug-in;
send a publishing instruction for the target plug-in to the target server in response to the publishing operation; and
receive a plug-in page access address for the target plug-in that is fed back by the target server, wherein the plug-in page access address, when accessed by a terminal device, is used to cause the terminal device to display a page of the target plug-in according to the plug-in configuration information.
